# FASCICULE DE BREVET EUROPEEN

(11) **EP 2 060 609 B1**
(45) Date de publication et mention de la délivrance du brevet: **25.02.2015**
(21) Numéro de dépôt: 08168919.2
(22) Date de dépôt: 12.11.2008
(51) Int. Cl.: B05D 7/00, C09D 7/12, C08G 59/50, C09D 163/00

(54) **Revêtement de décoration multicouches comportant une peinture bi-composant et une résine de protection**
Mehrschichtige Dekoverkleidung, die eine Zweikomponentenfarbe und Schutzharz enthält
Multilayer decoration covering including a bi-component paint and a protective resin

(30) Priorité: 13.11.2007 FR 0707965
(43) Date de publication de la demande: 20.05.2009
(73) Titulaire: DECORS DE FERRYVILLE, 45700 MORMANT SUR VERNISSON (FR)
(72) Inventeur: Palazzolo, Rocco, 75011 Paris (FR); Mejladi, Moktar, 45120 Cepoy (FR)
(74) Mandataire: Esselin, Sophie

(56) Documents cités:
- EP-A- 1 840 166
- GB-A- 956 128
- US-A- 4 403 003
- US-A- 4 508 763
- US-A1- 2004 186 242
- DATABASE WPI Week 198625 Thomson Scientific, London, GB; AN 1986-157253 XP002483475 & ES 8 603 297 A (VERA A G) 16 avril 1986 (1986-04-16)
- DATABASE WPI Week 200614 Thomson Scientific, London, GB; AN 2006-130642 XP002483476 & JP 2006 035828 A (DAINIPPON INK & CHEM INC) 9 février 2006 (2006-02-09)

## Description

Le domaine de l'invention est celui des revêtements de surface et notamment de surfaces exposées à des contraintes de tout type, par exemple de type charge pondérale (pour un sol) ou bien encore de type échauffement important (pour un plan de travail de cuisine) ou bien encore de type agression par des produits acides de nettoyage.

Il existe à ce jour de nombreuses classes de revêtements de surfaces très résistants mais ces revêtements nécessitent généralement une logistique assez lourde et lorsqu'il convient d'en changer pour cause de dégradation ou cause de changement de décoration, cette dernière opération s'avère également fastidieuse.

Ainsi aujourd'hui, lorsqu'un utilisateur cherche à changer un revêtement de décoration au sol par exemple de type carrelage, usuellement il procède au retrait de ce dernier et doit entreprendre des travaux assez lourds pour reposer un nouveau type de carrelage. Il en est de même lorsqu'un utilisateur souhaite changer un plan de travail de cuisine couplé au carrelage présent autour.

Alors que l'engouement du public pour des travaux de renouvellement de décoration ne cesse de croître, il convient de plus en plus de trouver des solutions facilitant ce type de travaux pour les utilisateurs et tout particulièrement pour les usagers amateurs.

Il a déjà été proposé concernant le revêtement de sol, d'utiliser des mortiers constitués par des agglomérats artificiels de grains minéraux ou synthétiques notamment des grains de quartz réunis dans une résine notamment époxyde ou polyuréthane.

De tels revêtements peuvent typiquement être fabriqués à partir de grains de quartz dits « extra-silicieux » obtenus à partir de sable épuré. Après leur fabrication, ces revêtements sont coulés et étalés sur le sol au moyen d'outils.

On obtient ainsi des revêtements qui peuvent avantageusement remplacer d'autres types de revêtements type moquette ou carrelage.

Néanmoins de tels revêtements présentent l'inconvénient d'exiger pour leur pose un processus de fabrication à la fois long et incommode.

Pour remédier à ce type de problème, il a été envisagé de proposer ce type de revêtement sous forme de dalles dures ou semi-rigides. De telles dalles ne donnent néanmoins pas entière satisfaction dans la mesure où elles restent cassantes et nécessitent d'être chauffées au moment de leur pose pour pouvoir épouser différentes inhomogénéités de surface.

Dans ce contexte, la présente invention propose une solution facile de mise en oeuvre comportant l'intérêt de cumuler des aspects de décoration avec des facilités de mise en oeuvre.

Plus précisément la présente invention propose un nouveau type de revêtement susceptible de recouvrir une surface de type un sol ou un plan de travail ou un évier ou un sanitaire de type lavabo, baignoire, cabine de douche ou des surfaces d'appareil électroménagers caractérisé en ce qu'il comporte au moins une couche de peinture bi-composant et une couche superficielle de résine de protection,
- ladite résine étant translucide ou transparente et comportant au moins un premier composant de type bisphénol A et d'épichlorhydrine et au moins un second composant de type polyamine
- ladite peinture bi-composant comportant :
   ∘ un premier composant de type prépolymère, comprenant un mélange de bisphénol A d'épichlorhydrine, et de bisphénol F d'épichlorhydrine, le bisphénol F permettant d'assurer de bonnes propriétés d'adhérence sur la surface destinée à être recouverte par ledit revêtement et ;
   ∘ au moins un second composant de type polyamine.

Le revêtement de l'invention combine ainsi les avantages liés à une peinture résistante bi-composant assurant les effets de décoration et ceux d'une résine de protection encapsulant la peinture décorative.

Il peut en outre avantageusement recouvrir tout ancien revêtement assurant une nouvelle décoration sans procéder au retrait d'un ancien revêtement.

Selon une variante de l'invention, la résine de protection comporte des inclusions renforçant l'aspect de décoration conférée par la couche de peinture.

Selon une variante de l'invention, ces inclusions sont de type paillettes, ou des micro-objets ou bien encore des particules luminescentes ou phosphorescentes.

Selon une variante de l'invention, le revêtement comporte en outre une couche intermédiaire de peinture, pouvant être avantageusement une peinture de type acrylique.

Avantageusement dans ce cas, la peinture bi-composant assure à la fois une couche d'adhérence et un fond pouvant être clair sur lequel on peut venir réaliser des décorations type décorations marbrées.

Selon une variante de l'invention, la peinture bi-composant comporte au moins un premier composant de type prépolymère à base de bisphénol et d'épichlorhydrine et au moins un second composant de résine époxy de polyamine et de polyol.

Selon une variante de l'invention, la peinture bi-composant comporte en outre un solvant de type 3-butoxy-2-propanol.

Selon une variante de l'invention, la peinture bi-composant comporte en outre un solvant de type 1-méthoxy-2-propanol.

Selon une variante de l'invention, la peinture bi-composant comporte en outre des charges minérales de type dioxyde de titane et/ou de type mica et/ou de type sulfate de baryum et/ou de type talc et/ou de type silicate alcalin, permettant de renforcer ladite peinture et la rendant également résistante à des agressions acides dues à des produits classiques de nettoyage.

Avantageusement, la peinture bi-composant est une peinture à l'eau, permettant des effets de décoration similaires à ceux des peintures acryliques à l'eau.

Selon une variante de l'invention, la peinture bi-composant comprend des pigments colorants et les composés suivants :
- bisphénol-A-épichlorhydrine : 10 à 20 %
- bisphénol-F-épichlorhydrine : 2,5 à 7,5 %
- résine de polyamine et de polyol : 10 à 20 %
- 3-butoxy-2-propanol : 0,1 à 5 %
- 1-méthoxy-2-propanol : 0,1 à 5 %
- dioxyde de titane : 15 à 25 %
- silicate alcalin : 2,5 à 7,5 %
- Mica : 2,5 à 7,5 %
- Sulfate de baryum : 15 à 25 %
- Talc : 2,5 à 7,5 %
- Eau : 15 à 25 %

Selon une variante de l'invention, la résine de protection est une résine bi-composant comportant au moins un premier composant de type prépolymère à base de bisphénol et d'épichlorhydrine et au moins un second composant de type triméthylcyclohexylamine.

Selon une variante de l'invention, le prépolymère comporte en outre un éther d'alkyl (C12-C14)glycidyl , de type oxirane.

Selon une variante de l'invention, le premier composant de la résine de protection comporte en outre un solvant de type 3-butoxy-2-propanol.

Selon une variante de l'invention, le second composant de la résine de protection comporte en outre un solvant de type alcool benzylique.

Selon une variante de l'invention, la résine de protection comporte en outre un agent antimousse.

Selon une variante de l'invention, la résine de protection répond à la formule chimique suivante :
- bisphénol-A-épichlorhydrine : 10 à 20 % ;
- 3-aminomethyl-3,5,5-triméthylcyclohexylamine : 5 à 10 % ;
- éther d'alkyl (C12-C14)glycidyl : 10 à 20 % ;
- 3-butoxy-2-propanol : 10 à 20 % ;
- alcool benzylique : 15 à 25 % ;
- huile de pin : 0,1 à 5 % , permettant d'obtenir une épaisseur de résine de l'ordre 400 microns.

Selon une variante de l'invention, la résine de protection répond à la formule chimique suivante :
- bisphénol-A-épichlorydrine : 45 à 60 %
- 3-aminomethyl-3,5,5-triméthylcyclohexylamine : 5 à 10 % ;
- éther d'alkyl (C12-C14)glycidyl : 15 à 25 % ;
- 3-butoxy-2-propanol : 1 à 5 % ;
- alcool benzylique : 15 à 25 % ;
- huile de pin : 0 à 0,05 % , permettant d'obtenir des épaisseurs de résine plus importantes, typiquement de l'ordre de 1000 microns, et compatibles avec l'introduction d'inclusions de particules.

Selon une variante de l'invention, la résine de protection comporte en outre des particules de quartz permettant d'en renforcer la tenue mécanique.

Selon une variante de l'invention, la résine comporte en outre des particules satinantes ou matifiantes, pouvant être avantageusement des particules de cire.

Selon une variante de l'invention, la couche de peinture bi-composant présente une épaisseur de l'ordre d'une cinquantaine de microns à environ cinq cents microns.

Selon une variante de l'invention, le revêtement étant destiné à recouvrir un sol, la résine de protection a une épaisseur d'environ 400 microns.

L'invention a aussi pour objet un procédé de réalisation d'un revêtement de décoration selon l'invention permettant de recouvrir une surface horizontale, caractérisé en ce qu'il comporte les étapes suivantes :
- le dépôt d'une couche de peinture bi-composant sur ladite surface ;
- le dépôt d'une couche de résine de protection sur la couche de peinture bi-composant ;
- le réglage de l'épaisseur de la couche de résine de protection à l'aide d'un rouleau calandreur.

Selon une variante de l'invention, le rouleau calandreur comprend une structure hélicoïdale de symétrie axiale, présentant un filetage dont les dimensions sont ajustées pour régler l'épaisseur de la couche de résine.

L'invention a encore pour objet l'utilisation du revêtement de décoration selon l'invention pour recouvrir par exemple un sol ou un plan de travail ou un évier ou un sanitaire de type lavabo, baignoire, cabine de douche ou bien encore tout type d'autres surfaces telles que des surfaces d'appareil électroménagers, que l'on peut vouloir revêtir et décorer.

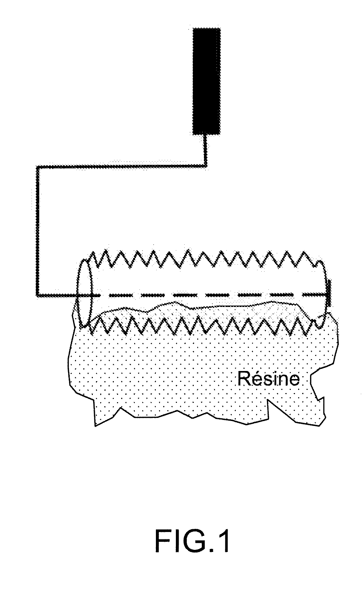

L'invention sera mieux comprise et d'autres avantages apparaîtront à la lecture de la description qui va suivre et grâce à la figure 1 qui illustre un exemple de rouleau permettant d'étaler la résine de protection du revêtement de l'invention.

De manière générale, le revêtement selon l'invention comporte au moins une première couche de peinture facile à déposer et présentant une bonne adhérence sur différents types de surfaces, recouverte d'une résine de protection résistant aux agressions de toute nature. L'intérêt de la présente invention réside notamment dans la possibilité de pouvoir facilement modifier un revêtement sans même avoir le besoin de retirer un revêtement préexistant et ce avec une épaisseur suffisamment faible pour ne pas générer de différences de niveau au sol entre différentes pièces par exemple et également sous des portes.

Dans le cas par exemple d'un carrelage abîmé qu'il conviendrait de retirer, avantageusement et selon l'invention, il devient possible de procéder à l'enduction avec une peinture décorative recouverte de la résine de protection de ladite surface. Un tel type de revêtement de par ses propriétés de fluidité permet de masquer tous les défauts de l'ancien revêtement et de proposer un revêtement neuf sans travaux préalables de retrait de matériau, qui peuvent s'avérer longs et pénibles. Il en est de même lorsque l'on veut changer un sanitaire de type lavabo, baignoire, évier pouvant présenter des défauts dans l'émail.

Selon l'invention on procède dans un premier temps au dépôt d'une couche de peinture bi-composant présentant l'intérêt d'être très résistante après réaction des deux composants entre eux.

La peinture bi-composant comprend un premier composant de type prépolymère à base de bisphénol A et d'épichlorhydrine et de bisphénol F et d'épichlorhydrine.

Les formules du bisphénol A et de bisphénol F susceptibles de former le composé sont détaillées ci-après :

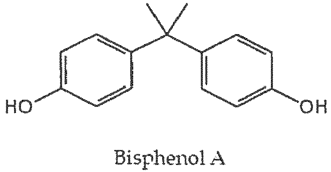

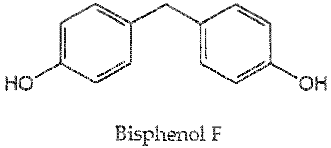

Les réactions sont celles selon un schéma réactionnel de type :

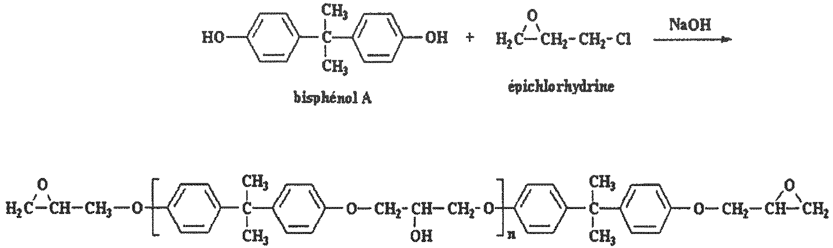

L'intérêt de l'ajout d'un bisphénol F réside dans l'amélioration des propriétés d'accroche pouvant être obtenues dans la peinture finale.

De manière générale, en présence de prépolymères, il convient de développer des liaisons entre lesdits prépolymères. Pour cela on ajoute un deuxième composant de type polyamine pouvant réagir avec les liaisons terminales des prépolymères. En effet, les électrons de la polyamine attaquent l'atome de carbone proche de l'oxygène de l'époxyde, donnant une charge négative à l'oxygène et une charge positive à l'azote.

Selon un exemple de revêtement de l'invention, les deux types de composants particulièrement bien adaptés pour la peinture bi-composant sont :
- un premier composé de type : un mélange de bisphénol A d'épichlorhydrine et de bisphénol F d'épichlorhydrine ;
- un second composé de type résine de polyamine et de polyol.

Les deux composants dans des solvants de type 3-butoxy-2-propanol et 1-méthoxy-2-propanol sont mélangés au moment de l'emploi pour recouvrir la surface concernée. Ce mélange est avant enduction mélangé à de l'eau pour obtenir la viscosité voulue. Par ailleurs des charges minérales y sont également ajoutées : des charges classiques pour obtenir les couleurs souhaitées et d'autres charges type des silicates alcalins comportant par exemple du magnésium ou de l'aluminum ou bien encore du fer, particulièrement bien adaptés pour des applications de revêtements de sols.

L'intérêt de ces peintures tient à leur très bonne résistance ce qui permet de les utiliser en tant que revêtement autre de décoration alors que la plupart des peintures sont utilisées uniquement pour recouvrir des murs ou des plafonds. Elle présente par ailleurs un fort pouvoir d'accroche sur tout type de surface.

On obtient ainsi une première couche de décoration présentant toute la palette de décoration souhaitée en fonction des pigments présents dans ladite couche et présentant de manière classique une épaisseur d'environ 400 à 500 microns.

Lorsque la couche de peinture bi-composant est bien séchée (typiquement après environ une dizaine d'heures), on procède alors au dépôt d'une couche de résine de protection qui permet ainsi d'encapsuler la couche de peinture et de protéger les effets de décoration.

La résine de protection proposée dans la présente invention possède des propriétés particulières en terme de résistance et de facilité à pouvoir recouvrir avec une grande uniformité de nombreuses surfaces en permettant ainsi de nombreuses applications.

Selon l'invention, la résine est avantageusement translucide, voire même transparente permettant de laisser apparente la décoration réalisée préalablement. Elle peut avantageusement elle-même comprendre des inclusions renforçant les effets de décoration. Ces inclusions peuvent être de tout type : micro-objets de décoration pour éléments de salle de bain ou de sanitaire, inclusions pouvant être rendues lumineuses pour revêtement au sol par l'ajout de particules luminescentes ou phosphorescentes, .... Dans ce cas, la résine de protection comporte avantageusement une épaisseur plus élevée de l'ordre de 1000 microns.

Pour présenter une grande résistance aux agressions qu'elles soient de nature mécanique ou chimique, la résine de protection du revêtement de l'invention est avantageusement une résine également bi-composant.

Elle peut typiquement comprendre également un premier composant de type bisphénol A et d'épichorhydrine et un second composant de type polymamine. Le premier composant peut aussi avantageusement comprendre de l'éther d'alkyl (C12-C14)glycidyl. Les solvants employés pour réaliser le mélange desdits composants peuvent typiquement être de type du 3-butoxy-2-propanol et de l'alcool benzylique.

Selon une variante de l'invention, le revêtement peut comporter en outre une couche intermédiaire de peinture, pouvant être avantageusement une peinture de type acrylique. Dans ce cas, la peinture bi-composant assure à la fois une couche d'adhérence et un fond pouvant être clair sur lequel on peut venir réaliser des décorations grâce à la couche de peinture intermédiaire pouvant être de type couche de peinture acrylique.

Selon ce procédé on peut également réaliser des effets de décoration particuliers type décoration marbrée. Pour cela, on procède au dépôt d'une certaine quantité de peinture que l'on vient étaler avec une spatule, selon différentes directions par exemple, pour obtenir les effets marbrés recherchés.

De manière générale, pour réaliser un revêtement sur une surface horizontale, type sol ou plan de travail, après dépôt de la couche de peinture bi-composant, on vient procéder au dépôt de la couche de résine de protection. Typiquement la résine de protection peut être coulée puis on vient régler l'épaisseur voulue à l'aide d'un outil spécifique de type rouleau calandreur. Pour cela un tel rouleau peut présenter un filetage métallique dont les dimensions du filetage permettent de régler l'épaisseur de la couche de résine. Un exemple de rouleau pour déposer cette résine de protection est illustré en figure 1.

## Revendications

1. Revêtement de décoration susceptible de recouvrir une surface de type un sol ou un plan de travail ou un évier ou un sanitaire de type lavabo, baignoire, cabine de douche ou des surfaces d'appareil électroménagers **caractérisé en ce qu'**il comporte au moins une couche de peinture bi-composant et une couche superficielle de résine de protection,
- ladite résine étant translucide ou transparente et comportant au moins un premier composant de type bisphénol A et d'épichlorhydrine et au moins un second composant de type polyamine ;
- ladite peinture bi-composant comportant :
∘ un premier composant de type prépolymère, comprenant un mélange de bisphénol A d'épichlorhydrine, et de bisphénol F d'épichlorhydrine, le bisphénol F permettant d'assurer de bonnes propriétés d'adhérence sur la surface destinée à être recouverte par ledit revêtement et ;
∘ au moins un second composant de type polyamine.

2. Revêtement de décoration selon la revendication 1, **caractérisé en ce que** la peinture bi-composant comporte en outre un solvant de type 3-butoxy-2-propanol.

3. Revêtement de décoration selon l'une des revendications 1 ou 2, **caractérisé en ce que** la peinture bi-composant comporte en outre un solvant de type 1-méthoxy-2-propanol.

4. Revêtement de décoration selon l'une des revendications 1 à 3, **caractérisé en ce que** la peinture bi-composant comporte en outre des charges minérales de type dioxyde de titane et/ou de type mica et/ou de type sulfate de baryum et/ou de type talc et/ou de type silicate alcalin, permettant de renforcer ladite peinture.

5. Revêtement de décoration selon l'une des revendications 1 à 4, **caractérisé en ce que** la peinture bi-composant comporte en outre de l'eau.

6. Revêtement de décoration selon l'une des revendications 1 à 5, **caractérisé en ce que** la peinture bi-composant comprend des pigments colorants et les composés suivants :
- bisphénol-A-épichlorhydrine : 10 à 20 %
- bisphénol-F-épichlorhydrine : 2,5 à 7,5 %
- résine de polyamine et de polyol : 10 à 20 %
- 3-butoxy-2-propanol : 0,1 à 5 %
- 1-méthoxy-2-propanol : 0,1 à 5 %
- dioxyde de titane : 15 à 25 %
- silicate alcalin : 2,5 à 7,5 %
- Mica : 2,5 à 7,5 %
- Sulfate de baryum : 15 à 25 %
- Talc : 2,5 à 7,5 %
- Eau: 15 à 25 %

7. Revêtement de décoration selon l'une des revendications 1 à 6, **caractérisé en ce que** la résine de protection est une résine bi-composant comportant au moins un premier composant comprenant un prépolymère comportant au moins un premier composant de type prépolymère à base de bisphénol et d'épichlorhydrine et au moins un second composant de type triméthylcyclohexylamine.

8. Revêtement de décoration selon la revendication 7, **caractérisé en ce que** le prépolymère de la résine comporte en outre un éther d'alkyl (C12-C14)glycidyl.

9. Revêtement de décoration selon l'une des revendications 7 ou 8, **caractérisé en ce que** le premier composant de la résine de protection comporte en outre un solvant de type 3-butoxy-2-propanol.

10. Revêtement de décoration selon l'une des revendications 7 à 9, **caractérisé en ce que** le second composant de la résine de protection comporte en outre un solvant de type alcool benzylique.

11. Revêtement de décoration selon l'une des revendications 1 à 10, **caractérisé en ce que** la résine de protection comporte en outre un agent antimousse.

12. Revêtement de décoration selon l'une des revendications 1 à 11, **caractérisé en ce que** la résine de protection répond à la formule chimique suivante :
- bisphénol-A-épichlorhydrine : 10 à 20 % ;
- 3-aminomethyl-3,5,5-triméthylcyclohexylamine : 5 à 10 % ;
- éther d'alkyl (C12-C14)glycidyl : 10 à 20 % ;
- 3-butoxy-2-propanol : 10 à 20 % ;
- alcool benzylique : 15 à 25 % ;
- huile de pin : 0,1 à 5 % .

13. Revêtement de décoration selon l'une des revendications 1 à 11, **caractérisé en ce que** la résine de protection répond à la formule chimique suivante :
la résine de protection répond à la formule chimique suivante :
- bisphénol-A-épichlorydrine : 45 à 60 %
- 3-aminomethyl-3,5,5-triméthylcyclohexylamine : 5 à 10 % ;
- éther d'alkyl (C12-C14)glycidyl : 15 à 25 % ;
- 3-butoxy-2-propanol : 1 à 5 % ;
- alcool benzylique : 15 à 25 % ;
- huile de pin : 0 à 0,05 %, permettant d'obtenir une épaisseur compatible avec l'introduction d'inclusions de particules.

14. Revêtement de décoration selon l'une des revendications 1 à 12, **caractérisé en ce que** la résine de protection comporte en outre des particules de quartz.

15. Revêtement de décoration selon l'une des revendications 1 à 14, **caractérisé en ce que** la résine de protection comporte en outre des inclusions renforçant l'aspect de décoration conférée par la couche de peinture.

16. Revêtement de décoration selon la revendication 15, **caractérisé en ce que** les inclusions sont de type paillettes, ou des micro-objets ou bien encore des particules luminescentes ou phosphorescentes.

17. Revêtement de décoration selon l'une des revendications 1 à 17, **caractérisé en ce qu'**il comporte en outre une couche intermédiaire de peinture, pouvant être de type acrylique.

18. Revêtement de décoration selon l'une des revendications 1 à 17, **caractérisé en ce que** la résine de protection comporte en outre des particules satinantes ou matifiantes, pouvant être de type particules de cire.

19. Procédé de réalisation d'un revêtement de décoration selon l'une des revendications 1 à 18 sur une surface, **caractérisé en ce qu'**il comporte les étapes suivantes :
- le dépôt d'une couche de peinture bi-composant sur ladite surface ;
- le dépôt d'une couche de résine de protection sur la couche de peinture bi-composant ;
- le réglage de l'épaisseur de la couche de résine de protection à l'aide d'un rouleau calandreur.

20. Procédé de réalisation d'un revêtement de décoration selon la revendication 19, **caractérisé en ce que** le rouleau calandreur comprend une structure hélicoïdale de symétrie axiale.

## Patentansprüche

1. Dekorverkleidung, die imstande ist, eine Oberfläche vom Typ eines Bodens oder einer Arbeitsfläche oder eines Spülbeckens oder einer Sanitärvorrichtung vom Typ eines Waschbeckens, einer Badewanne, Duschkabine oder Oberflächen eines Haushaltsgeräts zu bedecken, **dadurch gekennzeichnet, dass** sie mindestens eine Zweikomponentenfarbschicht und eine oberflächliche Schutzharzschicht aufweist,
- wobei das Harz durchscheinend oder durchsichtig ist und mindestens eine erste Komponente vom Typ Bisphenol A und Epichlorhydrin und mindestens eine zweite Komponente vom Typ Polyamin aufweist,
- wobei die Zweikomponentenfarbe aufweist:
• eine erste Komponente vom Typ Präpolymer, das ein Gemisch aus Epichlorhydrin-Bisphenol A und aus Epichlorhydrin-Bisphenol F umfasst, wobei das Bisphenol F erlaubt, gute Hafteigenschaften auf der Oberfläche sicherzustellen, die zur Bedeckung durch die Verkleidung bestimmt ist,
• mindestens eine zweite Komponente vom Typ Polyamin.

2. Dekorverkleidung nach Anspruch 1, **dadurch gekennzeichnet, dass** die Zweikomponentenfarbe ferner ein Lösungsmittel vom Typ 3-Butoxy-2-propanol aufweist.

3. Dekorverkleidung nach einem der Ansprüche 1 bis 2, **dadurch gekennzeichnet, dass** die Zweikomponentenfarbe ferner ein Lösungsmittel vom Typ 1-Methoxy-2-propanol aufweist.

4. Dekorverkleidung nach einem der Ansprüche 1 bis 3, **dadurch gekennzeichnet, dass** die Zweikomponentenfarbe ferner mineralische Chargen vom Typ Titandioxid und/oder vom Typ Glimmer und/oder vom Typ Bariumsulfat und/oder vom Typ Talk und/oder vom Typ Alkalisilikat aufweist, die erlauben, die Farbe zu verstärken.

5. Dekorverkleidung nach einem der Ansprüche 1 bis 4, **dadurch gekennzeichnet, dass** die Zweikomponentenfarbe ferner Wasser aufweist.

6. Dekorverkleidung nach einem der Ansprüche 1 bis 5, **dadurch gekennzeichnet, dass** die Zweikomponentenfarbe Farbpigmente und die folgenden Verbindungen umfasst:
- Bisphenol-A-Epichlorhydrin: 10 bis 20 %,
- Bisphenol-F-Epichlorhydrin: 2,5 bis 7,5%,
- Polyamin- und Polyolharz: 10 bis 20%,
- 3-Butoxy-2-propanol: 0,1 bis 5%,
- 1-Methoxy-2-propanol: 0,1 bis 5%,
- Titandioxid: 15 bis 25%,
- Alkalisilikat: 2,5 bis 7,5%,
- Glimmer: 2,5 bis 7,5%,
- Bariumsulfat: 15 bis 25%,
- Talk: 2,5 bis 7,5%,
- Wasser: 15 bis 25%.

7. Dekorverkleidung nach einem der Ansprüche 1 bis 6, **dadurch gekennzeichnet, dass** das Schutzharz ein Zweikomponentenharz ist, das mindestens eine erste Komponente, die ein Präpolymer umfasst, das mindestens eine erste Komponente vom Typ Präpolymer auf der Basis von Bisphenol und von Epichlorhydrin umfasst, und mindestens eine zweite Komponente vom Typ Trimethylcyclohexylamin aufweist.

8. Dekorverkleidung nach Anspruch 7, **dadurch gekennzeichnet, dass** das Präpolymer des Harzes ferner einen Alkyl(C12-C14)glycidylether aufweist.

9. Dekorverkleidung nach einem der Ansprüche 7 oder 8, **dadurch gekennzeichnet, dass** die erste Komponente des Schutzharzes ferner ein Lösungsmittel vom Typ 3-Butoxy-2-propanol aufweist.

10. Dekorverkleidung nach einem der Ansprüche 7 bis 9, **dadurch gekennzeichnet, dass** die zweite Komponente des Schutzharzes ferner ein Lösungsmittel vom Typ Benzylalkohol aufweist.

11. Dekorverkleidung nach einem der Ansprüche 1 bis 10, **dadurch gekennzeichnet, dass** das Schutzharz ferner einen Schaumverhüter aufweist.

12. Dekorverkleidung nach einem der Ansprüche 1 bis 11, **dadurch gekennzeichnet, dass** das Schutzharz der folgenden chemischen Formel entspricht:
- Bisphenol-A-Epichlorhydrin: 10 bis 20%,
- 3-Aminomethyl-3,5,5-trimethylcyclohexylamin: 5 bis 10%,
- Alkyl(C12-C14)glycidylether: 10 bis 20%,
- 3-Butoxy-2-propanol: 10 bis 20%,
- Benzylalkohol: 15 bis 25%,
- Kienöl: 0,1 bis 5%.

13. Dekorverkleidung nach einem der Ansprüche 1 bis 11, **dadurch gekennzeichnet, dass** das Schutzharz der folgenden chemischen Formel entspricht:
das Schutzharz entspricht der folgenden chemischen Formel:
- Bisphenol-A-Epichlorhydrin: 45 bis 60%,
- 3-Aminomethyl-3,5,5-trimethylcyclohexylamin: 5 bis 10%,
- Alkyl(C12-C14)glycidylether: 15 bis 25%,
- 3-Butoxy-2-propanol: 1 bis 5%,
- Benzylalkohol: 15 bis 25%,
- Kienöl: 0 bis 0,05 %, das erlaubt, eine Dicke zu erhalten, die mit der Einführung von Partikelinklusionen kompatibel ist.

14. Dekorverkleidung nach einem der Ansprüche 1 bis 12, **dadurch gekennzeichnet, dass** das Schutzharz ferner Quarzpartikel aufweist.

15. Dekorverkleidung nach einem der Ansprüche 1 bis 14, **dadurch gekennzeichnet, dass** das Schutzharz ferner Inklusionen aufweist, die den von der Farbschicht verliehenen Dekoraspekt verstärken.

16. Dekorverkleidung nach Anspruch 15, **dadurch gekennzeichnet, dass** die Inklusionen vom Typ Pailletten oder Mikroobjekte oder auch lumineszierende oder phosphoreszierende Partikel sind.

17. Dekorverkleidung nach einem der Ansprüche 1 bis 17, **dadurch gekennzeichnet, dass** sie ferner eine Zwischenfarbschicht, die vom Acryltyp sein kann, aufweist.

18. Dekorverkleidung nach einem der Ansprüche 1 bis 17, **dadurch gekennzeichnet, dass** das Schutzharz ferner satinierende oder mattierende Partikel, die vom Typ Wachspartikel sein können, aufweist.

19. Herstellungsverfahren einer Dekorverkleidung nach einem der Ansprüche 1 bis 18 auf einer Oberfläche, **dadurch gekennzeichnet, dass** es die folgenden Schritte aufweist:
- das Aufbringen einer Zweikomponentenfarbschicht auf die Oberfläche,
- das Aufbringen einer Schutzharzschicht auf die Zweikomponentenfarbschicht,
- das Einstellen der Dicke der Schutzharzschicht mit Hilfe einer Kalanderwalze.

20. Herstellungsverfahren einer Dekorverkleidung nach Anspruch 19, **dadurch gekennzeichnet, dass** die Kalanderwalze eine axialsymmetrische Schneckenstruktur umfasst.

## Claims

1. A decorative coating for covering a surface such as a floor or a worktop or a sink or sanitary ware such as a wash basin, bath tub, shower cubicle or surfaces of electrical household appliances, **characterised in that** it comprises at least one layer of two-component paint and a surface layer of protective resin,
- said resin being translucent or transparent and comprising at least one first component of bisphenol A type and epichlorohydrin and at least one second component of polyamine type;
- said two-component pain comprising:
∘ a first component of prepolymer type, including a mixture of epichlorohydrin bisphenol A and epichlorohydrin bisphenol F, the bisphenol F making it possible to ensure that there are good adhesion properties to the surface intended to be covered by said coating and;
∘ at least one second polyamine-type component.

2. The decorative coating according to Claim 1, **characterised in that** the two-component paint further comprises a solvent of 3-butoxy-2-propanol type.

3. The decorative coating according to either of Claims 1 or 2, **characterised in that** the two-component paint further comprises a 1-methoxy-2-propanol-type solvent.

4. The decorative coating according to any of Claims 1 to 3, **characterised in that** the two-component paint further comprises titanium dioxide-type and/or mica-type and/or barium sulphate-type and/or talc-type and/or alkali silicate-type mineral fillers that make it possible to reinforce said paint.

5. The decorative coating according to any of Claims 1 to 4, **characterised in that** the two-component paint further comprises water.

6. The decorative coating according to any of Claims 1 to 5, **characterised in that** the two-component paint comprises colouring pigments and the following compounds:
- bisphenol-A-epichlorohydrin: 10 to 20%
- bisphenol-F-epichlorohydrin: 2.5 to 7.5%
- polyamine and polyol resin: 10 to 20%
- 3-butoxy-2-propanol: 0.1 to 5%
- 1-methoxy-2-propanol: 0.1 to 5*%*
- titanium dioxide: 15 to 25%
- alkali metal silicate: 2.5 to 7.5%
- mica: 2.5 to 7.5%
- barium sulphate: 15 to 25%
- talc: 2.5 to 7.5%
- water: 15 to 25%

7. The decorative coating according to any of Claims 1 to 6, **characterised in that** the protective resin is a two-component resin comprising at least one first component including a prepolymer comprising at least one first component of prepolymer type based on bisphenol and epichlorohydrin and at least one second component of trimethylcyclohexylamine type.

8. The decorative coating according to Claim 7, **characterised in that** the prepolymer of the resin further comprises an alkyl (C12-C14) glycidyl ether.

9. The decorative coating according to either of Claims 7 or 8, **characterised in that** the first component of the protective resin further comprises a 3-butoxy-2-propanol-type solvent.

10. The decorative coating according to any of Claims 7 to 9, **characterised in that** the second component of the protective resin further comprises a benzyl alcohol-type solvent.

11. The decorative coating according to any of Claims 1 to 10, **characterised in that** the protective resin further comprises an anti-foaming agent.

12. The decorative coating according to any of Claims 1 to 11, **characterised in that** the protective resin corresponds to the following chemical formula:
- bisphenol-A-epichlorohydrin: 10 to 20%;
- 3-aminomethyl-3,5,5-trimethylcyclohexylamine: 5 to 10%;
- alkyl (C12-C14) glycidyl ether: 10 to 20%;
- 3-butoxy-2-propanol: 10 to 20%;
- benzyl alcohol: 15 to 25%;
- pine oil: 0.1 to 5%.

13. The decorative coating according to any of Claims 1 to 11, **characterised in that** the protective resin corresponds to the following chemical formula:
- bisphenol-A-epichlorohydrin: 45 to 60%;
- 3-aminomethyl-3,5,5-trimethylcyclohexylamine: 5 to 10%;
- alkyl (C12-C14) glycidyl ether: 15 to 25%;
- 3-butoxy-2-propanol: 1 to 5%;
- benzyl alcohol: 15 to 25%;
- pine oil: 0 to 0.05 %, making it possible to obtain a thickness compatible with the introduction of particle inclusions.

14. The decorative coating according to any of Claims 1 to 12, **characterised in that** the protective resin further comprises quartz particles.

15. The decorative coating according to any of Claims 1 to 14, **characterised in that** the protective resin further comprises inclusions that reinforce the decorative appearance given by the paint layer.

16. The decorative coating according to Claim 15, **characterised in that** the inclusions are of flake type, or are micro-objects or else luminescent or phosphorescent particles.

17. The decorative coating according to any of Claims 1 to 17, **characterised in that** it further comprises an intermediate layer of paint which may be of acrylic type.

18. The decorative coating according to any of Claims 1 to 17, **characterised in that** the protective resin further comprises satinizing or mattifying particles which may be of wax particle type.

19. A process for producing a decorative coating according to any of Claims 1 to 18 on a surface, **characterised in that** it comprises the following steps:
- applying a layer of two-component paint to said surface;
- applying a layer of protective resin to the layer of two-component paint;
- adjusting the thickness of the layer of protective resin using a calender roller.

20. A process for producing a decorative coating according to Claim 19, **characterised in that** the calendar roller comprises a helical structure of axial symmetry.
